# DEMANDE DE BREVET EUROPEEN

(11) **EP 3 696 464 A1**
(43) Date de publication de la demande: **19.08.2020**
(21) Numéro de dépôt: 20156878.9
(22) Date de dépôt: 12.02.2020
(51) Int. Cl.: F23N 1/00, F16K 5/02, F16K 5/10, F16K 27/06

(54) **ROBINET DE GAZ UTILISABLE POUR UN COUPLE DE GAZ**

(30) Priorité: 13.02.2019 FR 1901435
(71) Demandeur: Société Nouvelle Sourdillon, 37250 Veigne (FR)
(72) Inventeur: TROCHOU, Christophe, 37250 Athee sur Cher (FR)
(74) Mandataire: Plasseraud IP

(57) **Abrégé**

L'invention se rapporte à un robinet de gaz permettant à l'utilisateur d'adapter l'ensemble de la plage de régulation de débit au type de gaz d'un couple de gaz de types différent grâce à un volet rotatif disposé dans un système de by-pass. A cet effet, le robinet de gaz (7) comprend un corps (100) pourvu d'une entrée de gaz (E), d'une sortie de gaz (S) et d'une pluralité de cavités, de couloirs et de passages destinés à relier l'entrée de gaz (E) à la sortie de gaz (S), un cône de régulation (103) s'étendant longitudinalement selon un premier axe longitudinal (Z) et ayant une surface extérieure, dans lequel un volet rotatif (V) est logé dans l'entrée (Ce) d'une troisième cavité (C) et est pourvu d'un passage (Pv), ledit volet rotatif (V) étant apte à tourner selon un second axe longitudinal (Z') dans la troisième cavité (C) entre une première position angulaire (O1), dans laquelle ledit passage (Pv) relie l'entrée (Ce) de la troisième cavité (C) à une deuxième entrée (Be2) d'une deuxième cavité (B), et une deuxième position angulaire (O2), dans laquelle ledit passage (Pv) diverge de l'entrée (Ce) de la troisième cavité (C).

## Description

### Domaine technique

La présente description concerne un robinet de gaz permettant de réguler une plage de sélection de débit de gaz et utilisable pour un couple de gaz.

Un robinet de gaz sert notamment à acheminer un gaz entrant vers une sortie en direction de brûleurs, par exemple pour une cuisinière à gaz ou un barbecue à gaz. Un tel robinet de gaz peut utiliser du gaz naturel autrement appelé gaz de ville (ou gaz GN) et/ou du gaz enrichi, tel que le butane ou le propane (appelé gaz LP). La plupart des robinets de gaz sont conçus sans distinction du gaz utilisé (GN ou LP). En effet, la quantité de gaz à fournir aux brûleurs en sortie du robinet pour un usage approprié diffère selon le type de gaz. Le robinet de gaz de la présente invention présente un système de détournement cavitaire, autrement appelé système de bypass, permettant l'utilisation du robinet pour un couple de gaz.

Plus précisément, la présente description concerne un robinet de gaz comprenant :
- un corps pourvu d'une entrée de gaz, d'une sortie de gaz et d'une plu-ralité de cavités, de couloirs et de passages destinés à relier l'entrée de gaz à la sortie de gaz,
- un cône de régulation s'étendant longitudinalement selon un premier axe longitudinal et ayant une surface extérieure,
dans lequel corps une première cavité de la pluralité de cavités, de couloirs et de passages s'étend dans la direction de l'axe longitudinal et a une entrée et une première sortie, le cône de régulation étant logé dans l'entrée de ladite première cavité de sorte que la surface extérieure dudit cône de régulation bouche l'entrée de la première cavité, le cône de régulation étant apte à tourner sur lui-même selon l'axe longitudinal dans la cavité,
dans lequel corps un premier couloir de la pluralité de cavités, de couloirs et de passages a une entrée et une sortie, l'entrée dudit premier couloir étant directement reliée à la sortie de la première cavité,
dans lequel corps une deuxième cavité de la pluralité de cavités, de couloirs et de passages a une première entrée et une sortie, la première entrée de ladite deuxième cavité étant directement reliée à la sortie du premier couloir,
- un passage pourvu dans ledit cône de régulation, ledit cône de régulation ayant une première position angulaire dans laquelle première position angulaire ledit passage pourvu dans ledit cône de régulation relie l'entrée de la première cavité à la première sortie de la première cavité,
- un deuxième couloir de la pluralité de cavités, de couloirs et de passages a une entrée et une sortie, ladite entrée dudit deuxième couloir étant directement reliée à une deuxième sortie de la première cavité, une troisième cavité de la pluralité de cavités, de couloirs et de passages a une entrée et une sortie, l'entrée de ladite troisième cavité étant directement reliée à la sortie du deuxième couloir et la sortie de ladite troisième cavité étant directement reliée à une deuxième entrée de la deuxième cavité, un volet rotatif est logé dans l'entrée de la troisième cavité et est pourvu d'un passage, ledit volet rotatif étant apte à tourner selon un second axe longitudinal dans la troisième cavité entre une première position angulaire, dans laquelle ledit passage relie l'entrée de la troisième cavité à la deuxième entrée de la deuxième cavité, et une deuxième position angulaire, dans laquelle ledit passage diverge de l'entrée de la troisième cavité.

Un tel robinet de gaz est destiné à être utilisé par exemple sur une cuisinière à gaz habituelle qui comprend un moyen d'inflammation du gaz sortant du robinet ainsi que des brûleurs. Un utilisateur peut souhaiter changer de type de gaz pour un gaz plus ou moins dense ayant un pouvoir calorifique plus ou moins important, par exemple lors d'un déménagement l'amenant à disposer d'un gaz fourni par sa commune plus ou moins dense avec un pouvoir calorifique plus ou moins important, ou de ne pas disposer de gaz de ville et devoir utiliser du gaz LP, plus dense et fourni en bouteille. Il souhaite alors pouvoir utiliser le gaz à disposition sur la même cuisinière, tout en conservant un pouvoir calorifique indépendant du gaz utilisé, par une simple adaptation sans devoir changer de robinet de gaz.

### Etat De La Technique

Il est connu de l'état de la technique d'utiliser un même robinet de gaz pour un couple de gaz.

Le document US 4947891 décrit un exemple d'un tel robinet de gaz, qui comprend classiquement une valve de régulation de débit de gaz sortant à manette de sélection rotative, pour réguler le débit de gaz sortant depuis une plage de régulation basse dite de bas débit sortant jusqu'à une plage de régulation haute dite de plein débit sortant. Le robinet vise à fournir un débit additionnel à la plage de régulation basse de débit sortant, notamment pour éviter qu'un gaz de densité trop faible ne voie son inflammation s'éteindre en plage de régulation basse du débit sortant. Un tel robinet comprend une pièce conique rotative à pas de vis, accessible par un tournevis selon un axe central de la manette de sélection rotative qui permet de réguler le débit de gaz sortant, permettant de fournir ou non un débit additionnel sur la plage de bas débit de gaz sortant. Ainsi, même lors de l'utilisation d'un gaz peu dense, le gaz sortant en bas débit reste enflammé grâce audit débit additionnel. La pièce conique peut être plus ou moins insérée grâce à son pas de vis au sein d'une cavité interne du robinet de gaz. Le volume interne de cette cavité est régulé par le volume occupé par la pièce conique plus ou moins insérée dans la cavité.

Cependant, un tel robinet de gaz est inadapté pour obtenir un débit additionnel de gaz sur l'ensemble de la plage de régulation de la manette de sélection rotative. Un tel robinet de gaz ne permet pas l'ajout du débit additionnel en dehors de la plage de bas débit de gaz sortant.

Par ailleurs, un tel robinet de gaz est peu efficace pour ajouter ou retirer le débit de gaz sortant additionnel à la plage de débit de gaz sortant principal en un minimum d'opération comme il est souhaité lors d'un changement de type de gaz, car il nécessite le serrage d'une vis sur une longueur telle que plusieurs tours de tournevis sont nécessaires.

Aussi la pièce conique nécessairement placée dans le même axe que la manette de sélection rotative présente une accessibilité depuis l'extérieur réduite par ladite manette malgré que son usage nécessite cette accessibilité.

### Objets

La présente description a notamment pour but de pallier aux inconvénients précédemment mentionnés.

A cet effet, le présent robinet de gaz est une solution permettant à l'utilisateur d'adapter l'ensemble de la plage de régulation du débit de gaz sortant du robinet de gaz grâce à un volet rotatif. Par exemple le volet rotatif est de type quart de tour. Selon un autre exemple, le volet rotatif est de type un huitième de tour. Le volet rotatif est accessible depuis une face dégagée du robinet, à faire tourner à l'aide d'un outil du commerce. Un outil classiquement utilisé peut par exemple être un tournevis, réglant ainsi l'ensemble de la plage de débit de gaz sortant en un seul geste de rotation du volet.

Par exemple, si un utilisateur utilise un robinet de gaz tel que le présent avec un premier gaz qualifié de plus dense, plus riche, plus concentré, à plus fort pouvoir calorifique dégagé lors de sa combustion, par rapport à un second gaz, l'utilisateur devra adapter le débit sortant du robinet lorsqu'il voudra passer à l'utilisation du second gaz avec le même robinet. En effet, un débit de gaz sortant pour une position définie intermédiaire est insuffisant avec le second gaz et peut empêcher complètement son indispensable inflammation préalable à son usage pour obtenir une puissance équivalente pour la position intermédiaire. Le robinet de gaz de la présente invention permet ainsi d'obtenir un débit constant, pour une position donnée de la manette de commande, indépendamment de la densité du gaz utilisé. Le robinet de gaz présenté ici voit ainsi un confort d'utilisation amélioré par rapport aux robinets déjà existant.

Surtout, entre le bas débit sortant et le plein débit sortant, le second gaz enflammé peut générer une température de flamme insuffisamment satisfaisante pour chauffer pour une même position intermédiaire.

Dit autrement, un objet de la présente invention est un robinet de gaz comprenant :
- un corps pourvu d'une entrée de gaz (E), d'une sortie de gaz (S) et d'une pluralité de cavités, de couloirs et de passages destinés à relier l'entrée de gaz (E) à la sortie de gaz (S), la pluralité de cavités, de couloirs et de passages comprenant une première cavité (A), un premier couloir (P1), une deuxième cavité (B), un couloir auxiliaire (P2), et une troisième cavité (C),
- un cône de régulation (103) s'étendant longitudinalement selon un premier axe longitudinal (Z) et ayant une surface extérieure,
dans lequel la première cavité (A) s'étend dans la direction de l'axe longitudinal (Z) et a une entrée (Ae), une première sortie (As1) et une deuxième sortie (As2), le cône de régulation étant logé dans ladite première cavité de sorte que la surface extérieure dudit cône de régulation bouche la première sortie de la première cavité, le cône de régulation étant apte à être tourné sur lui-même selon l'axe longitudinal (Z),
dans lequel le premier couloir (P1) a une entrée (P1e) et une sortie (P1s), l'entrée (P1e) dudit premier couloir (P1) étant directement reliée à la première sortie (As1) de la première cavité (A),
dans lequel la deuxième cavité (B) a une première entrée (Be1) et une sortie (Bs), la première entrée (Be1) de ladite deuxième cavité étant directement reliée à la sortie (P1s) du premier couloir (P1),
- un passage (Pr) pourvu dans ledit cône de régulation (103) et s'étendant autour d'une circonférence (111) du cône de régulation, ledit passage (Pr) présentant une section s'élargissant continuellement dans un sens selon ladite circonférence,
ledit cône de régulation ayant une première position angulaire (O1) dans laquelle ledit passage (Pr) pourvu dans ledit cône de régulation relie l'entrée (Ae) de la première cavité à la première sortie (As1) de la première cavité (A) et à la deuxième sortie (As2) de la première cavité,
dans lequel le couloir auxiliaire (P2) a une entrée (P2e) et une sortie (P2s), ladite entrée (P2e) dudit couloir auxiliaire (P2) étant directement reliée à la deuxième sortie (As2) de la première cavité,
dans lequel la troisième cavité (C) a une entrée (Ce) et une sortie (Cs), l'entrée (Ce) de ladite troisième cavité étant directement reliée à la sortie (P2s) du couloir auxiliaire (P2) et la sortie (Cs) de ladite troisième cavité étant directement reliée à une deuxième entrée (Be2) de la deuxième cavité (B),
et dans lequel il est prévu un volet rotatif (V) logé dans l'entrée (Ce) de la troisième cavité et pourvu d'un passage (Pv), ledit volet rotatif (V) étant apte à être tourné selon un second axe longitudinal (Z') dans la troisième cavité entre une première position angulaire (O1), dans laquelle ledit passage (Pv) relie l'entrée (Ce) de la troisième cavité à la deuxième entrée (Be2) de la deuxième cavité (B), et une deuxième position angulaire (O2), dans laquelle ledit passage (Pv) diverge de l'entrée (Ce) de la troisième cavité.

Dans des modes de réalisation, on peut éventuellement avoir recours en outre à l'une et/ou à l'autre des dispositions suivantes :
- le cône de régulation a une deuxième position angulaire, comprise dans une deuxième plage d'angle, dans laquelle position angulaire le passage pourvu dans le cône de régulation diverge de l'entrée de la première cavité ;
- la troisième cavité débouche à l'extérieur du corps par une face supérieure, ladite face supérieure étant différente de la face d'entrée du corps qui comprend l'entrée de gaz du corps et différente de la face de sortie du corps qui comprend la sortie de gaz du corps ;
- un système d'étanchéité est disposé autour du volet rotatif et bouche un interstice présent entre ledit volet rotatif et la troisième cavité ;
- le volet rotatif présente une face extérieure qui débouche sur l'extérieur du corps, laquelle face extérieure du volet rotatif dispose d'une empreinte de forme et dimension spécifiques, ladite empreinte étant apte à recevoir l'insertion d'un outil de mise en rotation du volet rotatif autour de son axe longitudinal ;
- le volet rotatif est constitué d'un cylindre creux à base circulaire et le passage comprend un premier trou débouchant situé sur une face latérale dudit cylindre et un deuxième trou débouchant situé sur la base dudit cylindre qui est intérieure au robinet;
- le volet rotatif comprend un troisième trou constituant une seconde entrée Ve'.
- le passage a une forme qui s'élargit selon une direction autour du cône de régulation ;
- le second axe longitudinal est parallèle au premier axe longitudinal ;
- le premier couloir et le couloir auxiliaire sont cylindriques ;
- le volet rotatif comprend un matériau choisi parmi le laiton, l'acier, l'aluminium, le cuivre ;
- le cône de régulation est creux et percé en sa base pour constituer l'entrée dudit cône de régulation.

### Brève description des dessins

D'autres caractéristiques et avantages apparaîtront au cours de la description suivante d'une forme de réalisation, donnée à titre d'exemple non limitatif, en regard des dessins joints. Sur les dessins :
La figure 1a est une vue en perspective d'un robinet de gaz sur lequel est pourvue un actionneur de valve de débit de gaz à crantage ;
La figure 1b est une vue en perspective d'un robinet de gaz dans lequel est pourvu un cône de régulation de débit et un volet rotatif ;
La figure 1c est une vue en coupe sélective du robinet comprenant une valve selon le mode de réalisation de la figure 1b, comprenant un volet rotatif fermé et la valve étant exclue de la coupe sélective ;
La figure 1d est la même vue en perspective qu'à la figure 1a avec le volet rotatif en position ouverte ;
La figure 1e est une vue en coupe du corps de robinet de la figure 1b pris seul ;
La figure 2a est une vue de face du cône de régulation ;
La figure 2b est une vue en coupe du robinet de gaz avec le cône de régulation de la figure 2a en première position angulaire montrant une section de passage étroite du passage Pr ;
La figure 2c est une vue en coupe du robinet de gaz avec le cône de régulation de la figure 2a en deuxième position angulaire, montrant une section de passage large du passage Pr ;
La figure 3a est une vue en perspective du volet rotatif pris seul ;
La figure 3b est une vue en coupe du robinet de gaz avec le volet rotatif ;
La figure 3c est une vue en perspective du volet rotatif de la figure 3a, sur lequel est placé un joint d'étanchéité ;
La figure 3d] est une vue en coupe du robinet de gaz avec le volet rotatif ;
La figure 4a est une vue en perspective d'une valve de contrôle de débit de gaz à crantage selon l'invention ;
La figure 4b est une vue du dessus de la valve de contrôle de débit de gaz à crantage selon le mode de réalisation de la figure 4a ;
La figure 5a est une vue en perspective d'une valve de contrôle de débit de gaz à crantage selon un autre mode de réalisation de l'invention ;
La figure 5b est une vue en coupe du profil d'un cran de la valve de contrôle de débit de gaz à crantage de la figure 5a, dans lequel est logé un pion ;
La figure 6a est une autre vue en perspective de la valve de contrôle de débit de gaz à crantage de la figure 5a ;
La figure 6b est une vue en coupe du profil d'un cran de la valve de contrôle de débit de gaz à crantage de la figure 6a, dans lequel est logé un pion ;
La figure 7a est une vue en perspective d'une valve de contrôle de débit de gaz à crantage selon un autre mode de réalisation ;
La figure 7b est une vue en coupe du profil d'un cran de la valve de contrôle de débit de gaz à crantage de la figure 7a, dans lequel est logé un pion ;
La figure 7c est la vue en coupe de la figure 7b, dans laquelle le pion est délogé du cran.

### Description Détaillée

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Sauf précision contraire, les expressions "approximativement", "sensiblement", "environ", "de l'ordre de", etc. signifient qu'une légère variation par rapport à la valeur nominale considérée est possible, notamment d'un pourcentage faible, en particulier à 10% près.

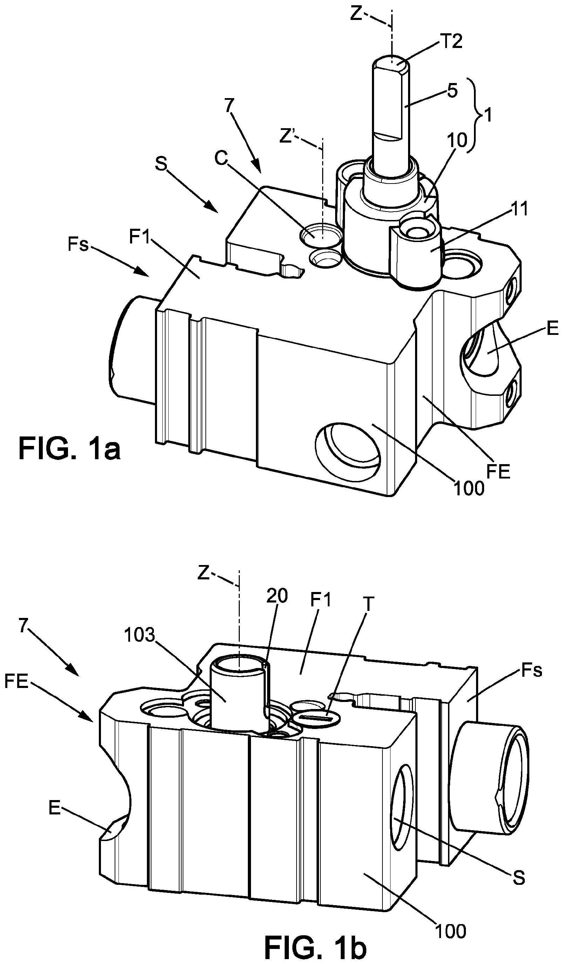

Dans la description qui suit, les termes « intérieur » et « extérieur » et leurs synonymes sont entendus comme se rapportant à l'intérieur et l'extérieur du boîtier 10 (ou palier en jargon indus), d'une cavité, d'un couloir, d'un passage ou d'une chambre de la valve 1 de contrôle de débit de gaz ou du robinet 7 de gaz lorsque ledit robinet 7 est dans son état d'assemblage final avec la valve 1 (visible en figure 1a). Sauf mention contraire explicite, les volumes intérieurs du robinet 7 sont communicants avec les volumes extérieurs du robinet 7 uniquement via une entrée E et une sortie S du robinet 7 illustrées sur la figure 1b.

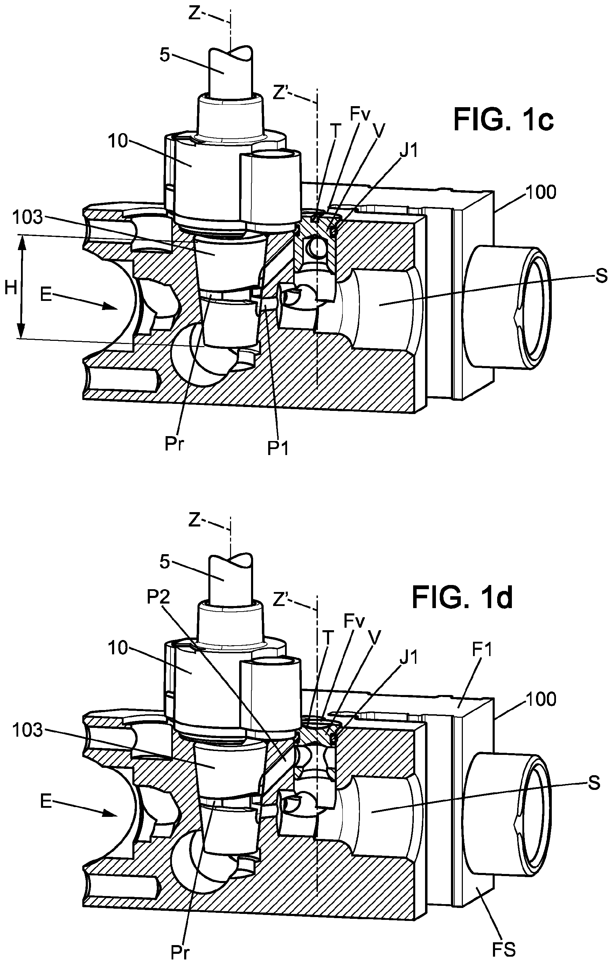

Par souci de clarté, seuls les éléments et étapes utiles à la compréhension des modes de réalisation décrits ont été détaillés. En particulier, les mécanismes d'assemblage de la valve 1 de la présente invention sur le robinet 7 n'ont pas été détaillés, les modes de réalisation décrits étant compatibles pour un assemblage avec les robinets de gaz usuels. Comme présenté en figure 1a, une valve 1 telle que décrite dans la présente invention est utilisée pour réguler le débit de gaz sortant d'un robinet 7 en direction de brûleurs, par exemple pour une cuisinière à gaz ou un barbecue à gaz. Un tel robinet 7 peut utiliser du gaz naturel autrement appelé gaz de ville ou gaz GN et/ou du gaz enrichi, tel que le butane ou le propane autrement appelé gaz LP. La plupart des robinets de gaz ne peuvent pas garantir la même puissance de chauffe pour un couple de gaz différent et pour un position intermédiaire définie (entre plein débit et débit réduit) (GN ou LP), du fait du débit différent à fournir aux brûleurs en sortie du robinet pour un usage approprié, notamment par rapport à l'inflammabilité du gaz préalable à son usage, et la température de flamme du gaz enflammé en utilisation. Le robinet 7 de la présente invention présente un système de détournement, autrement appelé système de bypass, permettant de garantir la même puissance de chauffe pour un couple de gaz (GN ou LP) quel que soit la position de la manette de commande. Ce système consiste à apporter un débit additionnel de sortie à un gaz de densité insuffisante. Un tel débit additionnel est obtenu par l'utilisation d'un couloir auxiliaire P2 additionnel à un premier couloir P1, visibles en figures 1c et 1d. Le couloir auxiliaire P2 mène à une cavité supplémentaire B qui rejoint la cavité suivante C vers la sortie S du robinet 7, additionnant ainsi le débit du couloir auxiliaire P2 au débit de sortie S du robinet 7 via la cavité B. Par ailleurs, le robinet 7 peut comprendre une valve 1 à crantage qui permet à l'utilisateur une sélection précise et répétable du débit de gaz sortant.

La figure 1c illustre une vue en coupe sélective du robinet 7 comprenant la valve 1 et le volet rotatif V. La valve 1 est hors de la coupe sélective et donc montrée pleinement. Le volet V est ici en position fermée et le robinet 7 ne délivre pas de débit additionnel en débit sortant par la sortie S. Ce robinet 7 est dans la configuration pour utiliser favorablement un gaz dense, tel qu'un gaz LP, ne nécessitant pas de débit sortant additionnel pour un usage adéquat pour un appareil à gaz particulier. Le robinet 7 comprend un corps 100 qui est en matière contenant de l'aluminium ou laiton et réalisé par exemple généralement en fonderie noyautée, filaire ou matriçage. Ce corps 100 est pourvu de l'entrée de gaz E et de la sortie de gaz S. Lors de l'assemblage final du robinet 7, par exemple sur une cuisinière à gaz, l'entrée E est destinée à recevoir le gaz sortant de la distribution fournie, par exemple via un tuyau reliant la sortie d'une bouteille de gaz LP à ladite entrée E. Lors de l'assemblage final de l'appareil à gaz, la sortie S du robinet de gaz est destinée à être reliée aux brûleurs de la cuisinière à gaz desquels sort le gaz destiné à être enflammé pour réaliser un chauffage.

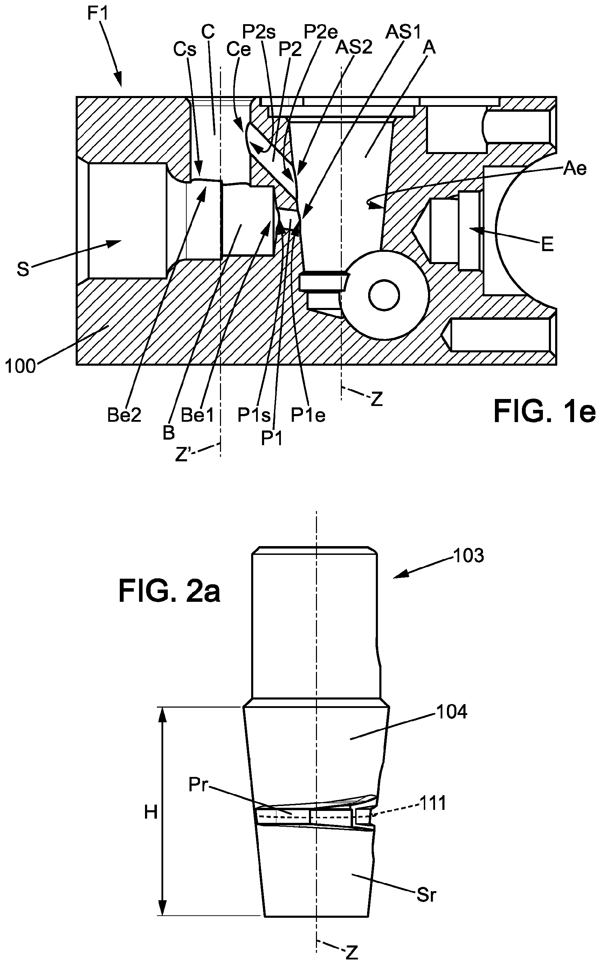

Comme visible en figure 1e, le corps 100 est creux et comprend une pluralité de cavités, de couloirs et de passages destinés à relier l'entrée de gaz E à la sortie de gaz S. Chacune des dénommées cavités, chacun des couloirs et chacun des passages pourraient tous indistinctement être entre autres dénommés sans perte de sens "cavité", "couloir", "passage", ou encore "chambre", "ouverture", "trou", "vide", "dégagement", "canal", "galerie", "conduit" ou "boyaux", pour désigner un volume intérieur creux du corps du robinet de gaz.

Une première cavité A de la pluralité de cavités, de couloirs et de passages s'étend selon un premier axe longitudinal Z et a une entrée Ae et une première sortie As1. Cette première cavité A est reliée par son entrée Ae à l'entrée de gaz E du corps 100. L'entrée Ae peut être pourvue selon l'axe longitudinal Z. Alternativement, l'entrée Ae peut être pourvue transversalement à l'axe longitudinal Z. Un cône de régulation 103, visible en figures 1c et 1d, s'étend selon le premier axe longitudinal Z et a une surface extérieure Sr. Ce cône 103 est logé dans l'entrée Ae et dans la première sortie As1 de la première cavité A, de sorte que la surface extérieure Sr dudit cône 103 bouche la première sortie As1 de la première cavité A. Le cône de régulation 103 est apte à tourner sur lui-même selon le premier axe longitudinal Z dans la cavité A. A cette fin, la première cavité A présente une taille et une forme adaptées à la surface extérieure Sr du cône 103, par exemple une forme conique complémentaire de ladite surface extérieure Sr. Des moyens connus permettent d'obtenir une rotation adéquate du cône 103 dans la première cavité A, c'est-à-dire suffisamment régulière, constante et précise pour la régulation du débit de gaz, tout en souhaitant maintenir durablement cette fonctionnalité. Ainsi, un roulement à bille ou un palier lisse par exemple peut être prévu entre le cône 103 et la première cavité A. Un lubrifiant peut être disposé au contact de la surface extérieure Sr du cône 103 pour favoriser son glissement contre la première cavité A. Le cône 103 est destiné à être mis en rotation par l'utilisateur via une manette de sélection rotative (non illustrée) montée sur le robinet 7.

Sur la figure 1c, le robinet 7 comprend le premier couloir P1 après la première cavité A. Comme visible sur la figure 1e, le premier couloir P1 a une entrée P1e et une sortie P1s. L'entrée P1e est directement reliée à la première sortie As1 de la première cavité A. Le robinet 7 comprend en outre une deuxième cavité B qui a une première entrée Be1 et une sortie Bs, la première entrée Be1 de ladite deuxième cavité B étant directement reliée à la sortie P1s du premier couloir P1.

Nous allons décrire à présent comment le cône de régulation 103 permet de réguler le débit de gaz dans le robinet. Le cône de régulation 103 peut tourner selon le premier axe Z dans la première cavité A. Il existe deux plages distinctes de positions angulaires du cône de régulation 103. La première plage de positions angulaires du cône de régulation 103 permet d'ouvrir le robinet 7, c'est-à-dire de permettre un débit non nul de gaz en sortie S du robinet 7. A l'inverse, la deuxième plage de positions angulaires du cône de régulation 103 permet de fermer le robinet 7, c'est-à-dire d'empêcher tout débit de gaz en sortie S du robinet 7. On définit ainsi que le cône de régulation 103 a une première position angulaire O1 comprise dans la plage principale U1 d'angle d'ouverture du robinet de gaz. La plage principale U1 est comprise entre 90 degrés et approximativement 270 à 300 degrés. Le robinet 7 comprend un passage Pr pourvu dans le cône de régulation 103 permettant de relier l'entrée Ae de la première cavité A à sa première sortie As1, seulement lorsque ledit cône de régulation 103 est dans la première position angulaire O1. A l'inverse, lorsque le cône de régulation 103 a une position angulaire non comprise dans la plage principale U1 d'angle, le passage Pr ne permet pas de relier l'entrée Ae de la première cavité A à la première sortie As1 de la première cavité A, car la surface extérieure Sr du cône de régulation 103 obstrue la première sortie As1 de la première cavité A. On définit que le cône de régulation 103 a une deuxième position angulaire O2 comprise dans la plage secondaire U2 d'angle, dans laquelle position angulaire O2 le passage Pr pourvu dans le cône de régulation 103 diverge de la première sortie As1de la première cavité A.

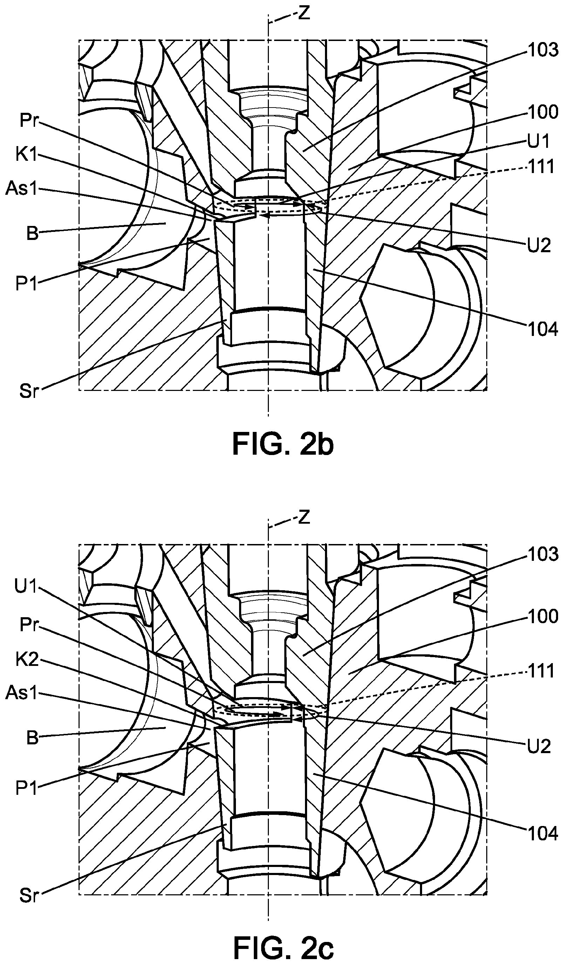

Dans le mode de réalisation de l'invention illustré en figure 1c, le passage Pr pourvu dans le cône de régulation 103 est tel que la plage principale U1 d'angle d'ouverture du robinet 7 représente environ trois quarts de tour et la plage secondaire U2 d'angle de fermeture du robinet 7 représente environ un quart de tour autour d'une circonférence donnée 111 (visible en figure 2a) du cône de régulation 103. La plage principale U1 d'angle du cône de régulation 103 permet ainsi d'ouvrir le robinet 7 sur environ trois quarts de la plage de rotation de la manette de sélection, c'est -à-dire par exemple sur environ 270° à 300°. Alternativement, la plage U1 peut être comprise en 160 et 250°, par exemple 180° à 210°. La plage secondaire U2 d'angle du cône de régulation 103 permet de fermer le robinet de gaz sur environ un quart de la plage de rotation de la manette de sélection rotative. En outre, le passage Pr pourvu dans le cône de régulation 103 présente une forme spécifique pour obtenir une régulation variable selon la deuxième position angulaire O2 du cône de régulation 103. En l'espèce, le passage Pr s'étend autour de ladite circonférence 111 du cône de régulation 103, et, par définition sur toute la plage principale U1 d'angle qui correspond à l'ouverture du débit de gaz. Une portion 104 du cône 103 est logée dans la première cavité A. Ladite portion 104 est conique et a une hauteur H selon le premier l'axe longitudinal Z. La plage principale U1 d'angle d'ouverture du robinet 7 représente environ trois quarts de tour du cône de régulation 103 et la plage secondaire U2 d'angle de fermeture du robinet 7 représente environ un quart de tour autour de la circonférence 111. La plage principale U1 d'angle du cône de régulation 103 permet ainsi d'ouvrir le robinet 7 sur environ trois quarts de la plage de rotation de la manette de sélection. La plage secondaire U2 d'angle du cône de régulation 103 permet de fermer le robinet de gaz sur environ un quart de la plage de rotation de la manette de sélection rotative. En outre, le passage Pr pourvu dans le cône de régulation 103 présente une forme spécifique pour obtenir une régulation variable selon la deuxième position angulaire O2 du cône de régulation 103. Comme illustré sur la figure 2a, la circonférence 111 est choisie selon le premier axe longitudinal Z à environ la moitié de la hauteur H de la portion 104 du cône 103. Ainsi, lorsque le cône 103 est inséré dans la première cavité A, le passage Pr se trouve sensiblement centré en hauteur dans la première cavité A. Le passage Pr se trouve ainsi en regard à la fois de l'entrée Ae et des sorties As1 et As2, lorsque le cône 3 est dans la première position d'angle O1. Ledit passage Pr a une section s'élargissant continuellement dans un sens selon ladite circonférence 111. Ainsi, quand le cône de régulation 103 est orienté dans la deuxième position angulaire O2 (robinet ouvert), le passage Pr présente une certaine section K1 en regard de la première sortie As1. Comme illustré sur les figures 2b et 2c, la section K1 d'ouverture augmente lors d'une rotation selon le premier axe longitudinal Z du cône 103 dans un premier sens. Le passage Pr présente alors une section K2 plus grande en regard de la première sortie As1 (voir figure 2c). Le débit sortant du robinet 7 est ainsi augmenté. A l'inverse, la section d'ouverture K2 diminue lors d'une rotation du cône 103 dans le second sens opposé au premier sens (voir figure 2b). Le passage Pr présente alors une section K1 plus petite en regard de la première sortie As1. Le débit du robinet 7 est ainsi diminué. Les sections K1 et K2 peuvent s'étendre au minimum sur 1.5mm. Les sections K1 et K2 peuvent s'étendre au maximum sur 3mm. La section K2 peut être le double de la section K1. Le passage Pr est réalisé dans le cône 103 de sorte à ce que le débit de gaz sortant du robinet 7 s'ajuste environ selon une rampe progressive pendant une rotation continue du cône 3. L'ajout du crantage sur le fond de la valve 1 crée des positions définies, stables et répétables de cette régulation.

Comme illustré sur la figure 1e, le passage Pr pourvu dans le cône 103 débouche sur la première sortie As1 qui est directement liée à l'entrée P1e du premier couloir P1. Le premier couloir P1 débouche par sa sortie P1s dans la deuxième cavité B par son entrée Be1. Comme illustré en figure 1e, la cavité B débouche directement sur la sortie S du corps 100. La deuxième cavité B débouche donc sur l'extérieur du corps 100. En outre, le couloir auxiliaire P2 relie une deuxième sortie As2 de la première cavité A à l'entrée Ce d'une troisième cavité C. Selon un mode de réalisation particulier, les couloirs P1 et P2 sont cylindriques. Aussi la deuxième cavité B débouche ici sur une face F1 dite face supérieure du corps 100. Ladite face supérieure F1 est une face extérieure du corps 100. Comme dans les modes de réalisation décrits, la face supérieure F1 est préférentiellement choisie sur une face extérieure du corps 100 différente de la face FE d'entrée E du corps 100 et différente de la face FS de sortie S du corps 100. Le volet V est logé dans la cavité B et présente une face Fv qui débouche sur l'extérieur du corps 100 par la face extérieure F1.

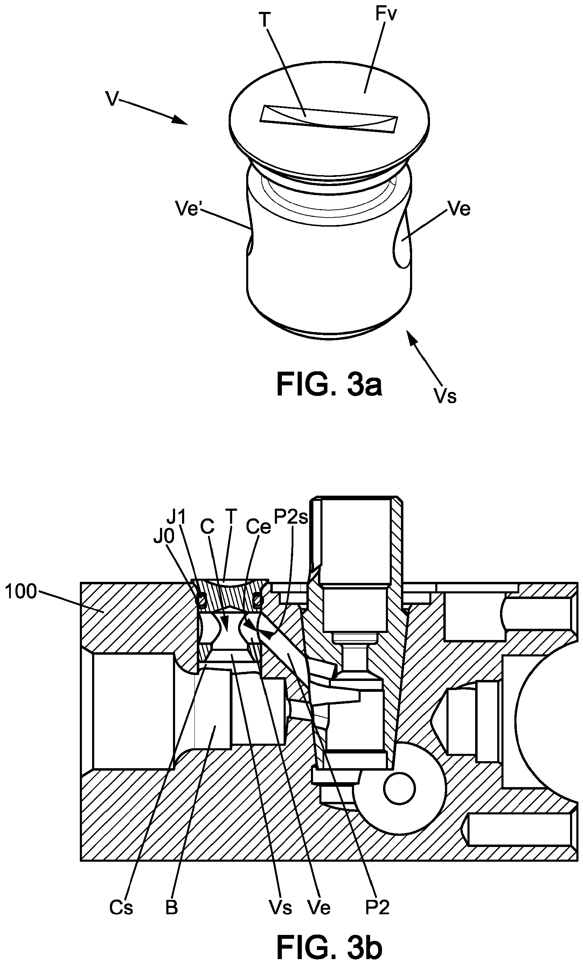

La figure 3a est une vue en perspective du volet V. Le volet V peut avoir une empreinte T pourvue sur ladite face Fv permettant de tourner le volet V. L'empreinte T fait donc face à l'extérieur du corps 100. Elle peut être par exemple une rainure pour tournevis plat comme illustré. Par exemple, l'empreinte T peut aussi être réalisée en forme de croix pour tournevis cruciforme, être un trou borgne de forme carré. Le volet V peut contenir du laiton.

Le corps 100 peut être dans un matériau contenant de l'aluminium. Comme illustré sur la figure 3b, un interstice J0 peut exister dans la troisième cavité C entre ledit corps 100 et le volet V.

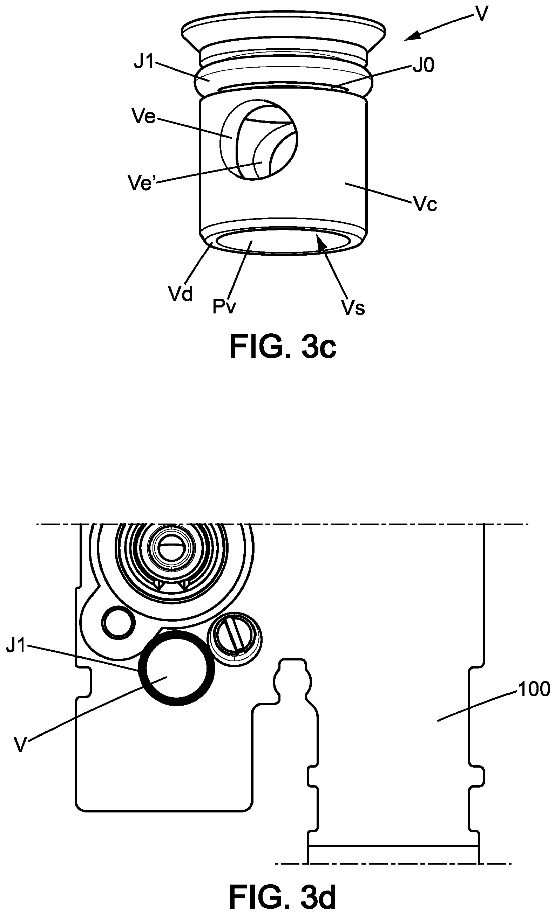

Afin d'assurer l'étanchéité du robinet 7, un système d'étanchéité J1 peut être prévu sur le volet V comme illustré sur la figure 3c. Le système d'étanchéité est par exemple un joint d'étanchéité. Le joint J1 est ainsi prévu pour boucher l'interstice J0 pouvant exister entre le volet V et la troisième cavité C.

Comme illustré sur la figure 3d que le joint J1 peut être circulaire et entoure le volet V. Moyennant ce joint d'étanchéité J1, le robinet 7 conserve son étanchéité malgré que la troisième cavité C débouche sur l'extérieur du corps 100 et même en cas de rotation du volet V.

Comme illustré sur la figure 1b, le premier axe longitudinal Z traverse en son centre la première cavité A et représente l'axe longitudinal du boîtier 100 cylindrique et de la portion 104 conique du cône de régulation 103.

Sur la figure 1c est illustré que le volet V peut tourner selon un second axe longitudinal Z'. Le second axe longitudinal Z' est parallèle au premier axe longitudinal Z et traverse la seconde cavité B en son centre. Le second axe longitudinal Z' est coaxial avec le volet V. Sur la figure 1c, le volet V ferme le débit additionnel car sa surface extérieure bouche l'entrée Ce de la troisième cavité C.

Sur la figure 3b est illustré un passage Pv pourvu dans le volet V, définissant son entrée Ve et sa sortie Vs. Le volet V est ici dans une position ouverte, comme sur la figure 3c, pour une utilisation du robinet 7 avec un gaz nécessitant un débit additionnel en sortie S, comme le gaz GN par exemple. La figure 3c montre une coupe transversale de la troisième cavité C comprenant le volet rotatif V et le joint J1 dans l'interstice J0. L'entrée Ve est directement en regard de la sortie P2s du couloir auxiliaire P2.

Le volet V peut avantageusement comprendre une partie creuse en forme de cylindre de révolution, comme illustré sur la figure 3c. Le passage Pv comprend alors un premier trou correspondant à l'entrée Ve, situé sur la surface courbe latérale Vc de la partie en forme cylindrique du volet V, et un deuxième trou correspondant à la sortie Vs, situé sur le disque Vd correspondant à la base qui est intérieure au robinet 7 de la forme cylindrique. Moyennant une telle forme de cylindre de révolution, l'entrée Ve et la sortie Vs sont sensiblement à angle droit. Le volet rotatif V peut ainsi être tourné de la position passante, dans laquelle Ve est en regard de l'entrée Ce, à la position de fermeture, en environ un quart de tour du volet V. Avantageusement, l'homme du métier peut prévoir un troisième trou débouchant Ve' comme illustré sur les figure 3a et 3c, moyennant quoi Ve ou Ve' peuvent être tous les deux mis en regard de l'entrée Ce pour ouvrir le robinet. Ainsi, il suffit d'environ un quart de tour du volet rotatif dans n'importe quel sens de rotation pour rendre le passage Pv passant et ajouter un débit additionnel de sortie au robinet 7.

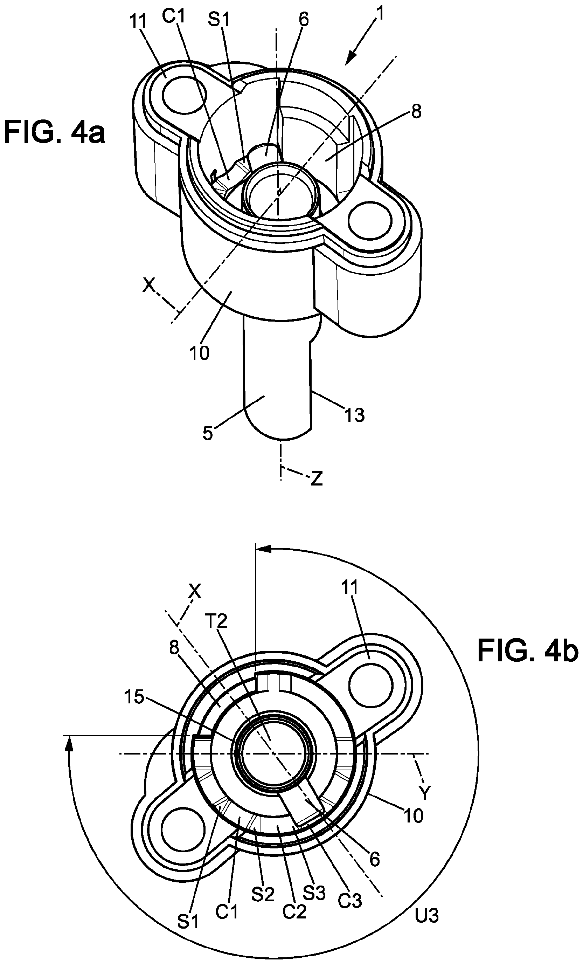

Les figures 4a et 4b sont des vues en perspective et de dessus d'une valve de contrôle de débit de gaz 1, en particulier une telle valve 1 comprenant un crantage. La valve 1 comporte un boîtier 10 et une tige 5 (poussoir).

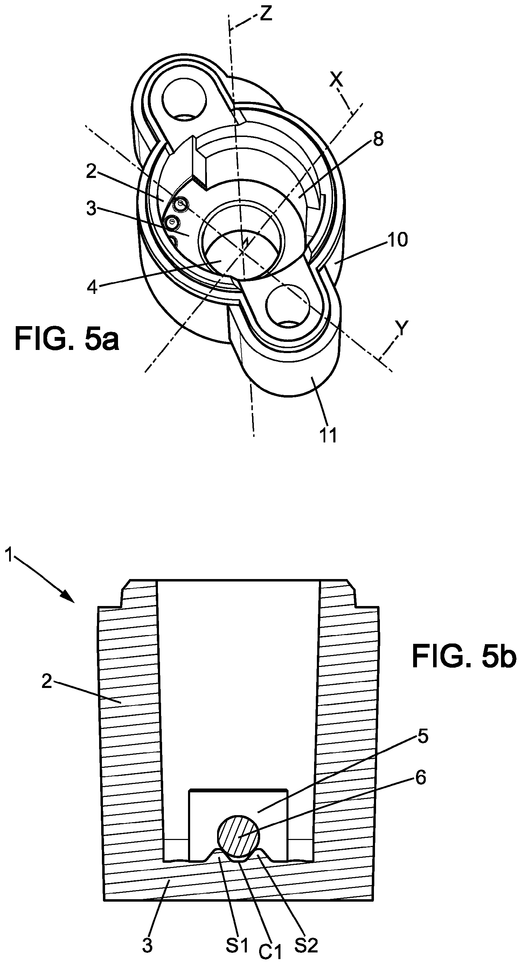

La figure 5a représente un boîtier 10 de la valve 1 ayant une paroi latérale 2 et un fond 3. Ce boîtier 10 peut être communément appelé « palier ». Ce boîtier 10 peut avantageusement être métallique. Il peut contenir de la fonte ou de l'aluminium. Il est préférentiellement réalisé en fonderie, avec ou sans noyau ou en tôlerie. La paroi latérale 2 est cylindrique et s'étend le long du premier axe longitudinal Z jusqu'au fond 3. Le fond 3 et la paroi latérale 2 définissent que le boîtier 10 est cylindrique et délimitent son intérieur et son extérieur. Dans la représentation de la figure 5a, le fond 3 est circulaire donc le boîtier 10 est un cylindre à base circulaire et l'intérieur du boîtier 10 est l'ensemble des points compris sur les normales à la surface concave de la paroi latérale 2, l'extérieur du boîtier 10 étant l'ensemble des points non compris à l'intérieur du boîtier 10. Dans d'autres modes de réalisation, le fond 3 peut être d'une forme non circulaire, notamment d'une forme elliptique ou polygonale. Le fond 3 est pourvu en outre d'une ouverture débouchante 4 qui est coaxiale au premier axe longitudinal Z selon lequel s'étend le boîtier 10 cylindrique. Ainsi, l'ouverture 4 est centrée par rapport au fond 3 du boîtier 10. L'ouverture débouchante 4 illustrée sur la figure 5a peut être circulaire et avoir un diamètre compris entre 40% et 70% de la plus petite longueur du fond 3 du boîtier 10. Une tige 5 s'étend selon le premier axe longitudinal Z. Elle est insérée ou emmanchée dans l'ouverture débouchante 4. Elle peut coulisser selon le premier axe longitudinal Z dans l'ouverture débouchante 4. Elle peut tourner sur elle-même à 360° dans l'ouverture débouchante 4 selon le premier axe longitudinal Z. La tige 5 peut être métallique. La tige 5 est un organe actionneur destiné à être mis en rotation selon le premier axe Z par l'utilisateur via une manette de sélection rotative (non illustrée ici). Il peut être prévu du lubrifiant dans l'ouverture débouchante 4 afin de faciliter les mouvements de la tige 5 dans l'ouverture débouchante 4. Lorsque la tige 5 est disposée dans l'ouverture débouchante 4, une première extrémité T1 de la tige 5 est comprise dans l'intérieur du boîtier 10, la seconde extrémité T2 de la tige 5 étant comprise à l'opposé et à l'extérieur du boîtier 10. La seconde extrémité T2 est destinée à accueillir la manette de sélection rotative (non illustrée ici). La seconde extrémité T2 peut à cet égard comprendre au moins une asymétrie, notamment un méplat 13 comme représenté sur la figure 4a. Cette asymétrie peut aussi par exemple comprendre une aspérité, une bosse, une saillie, un perçage, une empreinte, une rainure ou un chanfrein, à savoir toute forme complémentaire d'une manette de sélection rotative qui accueillerait ladite asymétrie. Un pion 6 est pourvu sur la tige 5. Lorsque la tige 5 est disposée dans l'ouverture débouchante, le pion 6 s'étend radialement en direction de la paroi latérale 2 selon un axe transversal à l'axe longitudinal Z. Le pion 6 peut être monobloc avec la tige 5 ou être une pièce rapportée fixée à la tige 5. Le pion 6 est positionné à proximité de la première extrémité T1. Le pion est situé à une distance de la première extrémité T1 inférieure à un quart de la longueur de la tige 5. Le pion peut être de forme cylindrique. Selon d'autres modes de réalisation non représentés, le pion 6 peut être de forme semi-cylindrique, conique, arrondie, présenter des méplats ou des chanfreins. En tournant sur elle-même dans le trou débouchant, la tige 5 entraîne en rotation le pion 6 autour du premier axe longitudinal Z. Le pion 6 entraîne en rotation le cône 103 par une forme pourvue à cet effet dans ledit cône 103. Par exemple, la figure 1b montre une rainure 20 pourvue dans le cône 103 destinée à loger le pion 6. Le cône 103, le pion 6 et la tige 5 peuvent ainsi être tournés ensemble selon le premier axe longitudinal Z. La rotation solidaire de ces trois éléments se fait sur une plage tertiaire U3 d'angle. La plage tertiaire U3 d'angle comprend une plage principale U1 d'angles correspondant à l'ouverture du robinet et une plage secondaire U2 d'angles correspondant à la fermeture du robinet. Le robinet peut ainsi être ouvert ou fermé sur la plage tertiaire U3 en tournant la tige 5.

Selon les modes de réalisation décrits notamment en figures 4a, 4b et 5a, une paroi transversale 8 est additionnellement pourvue à l'intérieur du boîtier 10. La paroi transversale 8 s'étend à l'intérieur de celui-ci selon un axe transversal X normal au premier axe longitudinal Z. La paroi transversale 8 s'étend depuis la paroi latérale 2 et jusqu'au fond 3. La paroi transversale 8 remplace une des saillies S1, S2,...Sn et un des creux C1, C2,...Cn. Cette paroi transversale 8 empêche la rotation de la tige 5 sur une partie de la plage secondaire U2 de rotation totale. La plage principale U1 et la plage secondaire U2 sont donc réduites par la présence de la paroi transversale 8. L'utilisation de la paroi transversale 8 est un obstacle limitatif de la plage U3 sur laquelle peut tourner la tige 5 est connue de l'homme du métier pour définir notamment la position de fermeture et la position d'ouverture minimale du débit de gaz lorsque le pion 6 est d'un côté ou de l'autre de ladite paroi transversale 8. Comme on le voit sur la figure 4a, le pion 6 bute contre la paroi 8. Un tel dispositif impose alors un premier sens rotatoire pour l'ouverture du débit de gaz et, à l'opposé, un second sens rotatoire pour la fermeture du débit de gaz. En outre, la position de débit de gaz maximal est avantageusement placée à un angle de rotation de la tige 5 qui est directement consécutif à la position de fermeture du débit de gaz lorsque l'utilisateur tourne la manette de sélection rotative du débit de gaz dans le premier sens rotatoire. Ainsi, il est connu d'encourager l'utilisateur du robinet 7 à utiliser le débit maximal pour l'inflammation du gaz sortant du brûleur en plaçant le débit maximal sur un angle proche de et successif à l'angle de fermeture.

Sur la figure 4b est indiquée la plage effective U3 d'angles pour lesquels une sélection du débit de gaz sortant du robinet est possible. En effet, lorsque la tige 5 entraîne selon son axe longitudinal le pion 6 sans que celui-ci ne rencontre d'obstacle tel que la paroi transversale 8, un débit de gaz sortant est directement permis, régulé ou coupé selon l'angle de rotation fourni sur la plage U3.

La tige 5 peut translater selon le premier axe longitudinal Z dans la direction de sa première extrémité T1 vers sa seconde extrémité T2, jusqu'à ce qu'elle soit bloquée lorsque son pion 6 bute contre le fond 3. Dans le sens inverse de translation, à savoir de sa seconde extrémité T2 vers sa première extrémité T1, la tige 5 est bloquée lorsque sa première extrémité T1 bute contre le robinet 7, ce qui stoppe la translation de la tige 5. Pour parfaire l'usage de la manette de sélection rotative, un moyen de maintien de la tige 5 au fond 3 du boîtier 10, c'est-à-dire de maintien en butée du pion 6 contre le fond 3 du boîtier 10 peut être prévu. Ainsi, il peut être prévu un rebord 15 à la première extrémité T1 de la tige 5. Comme illustré sur la figure 4b, ledit rebord 15 peut être notamment prévu dans le prolongement selon l'axe longitudinal Z du bord périphérique de la première extrémité T1. Le rebord 15 peut accueillir un moyen d'appui par exemple un ressort, (non illustré) de la première extrémité T1 contre une partie du robinet 7 sur lequel est fixée la valve 1. Ainsi, le pion 6 est destiné à être plaqué contre le fond 3.

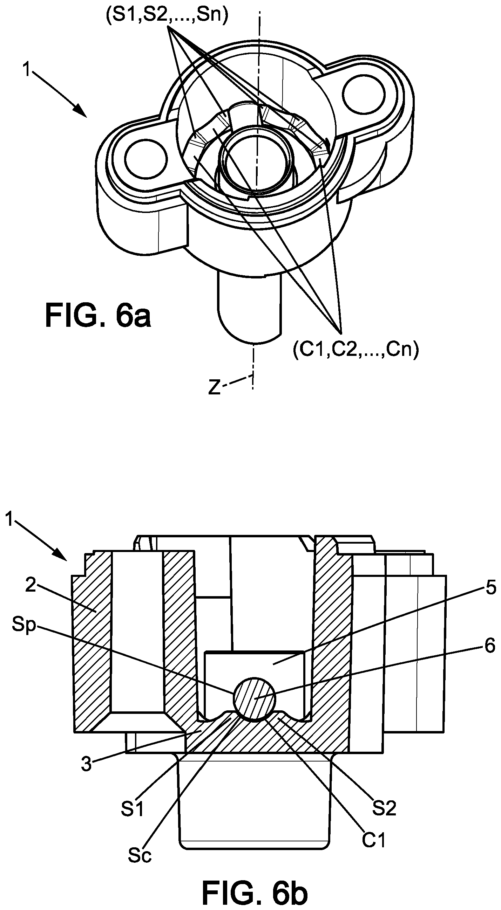

Comme indiqué sur les figures 5a, 6a, 7a, le fond 3 du boîtier 10 comprend une alternance de saillies S1, S2,...Sn et de creux C1, C2,...Cn qui définissent un crantage. Comme indiqué par exemple sur la figure 5a, les saillies S1, S2,...Sn et les creux C1, C2,...Cn s'étendent chacun radialement le long d'un axe Y transversal au premier axe longitudinal Z. L'axe transversal Y est un axe radial du boîtier 10 si celui-ci est cylindrique. L'axe transversal Y est sensiblement proche du fond 3 et transversal au premier axe longitudinal Z. En particulier, il peut être orthogonal au premier axe longitudinal Z. Chacun desdits creux se définit comme un renfoncement relatif à une saillie et est positionné entre deux saillies adjacentes. Chacun des ensembles d'une saillie et d'un creux qui se succèdent définit un cran du crantage. Le crantage est réparti sur l'ensemble de la troisième plage U3 de sélection du débit de gaz sortant de la valve 1. Le pion 6 plaqué sur le fond 3 est donc en interaction directe avec les creux et les saillies lors d'une rotation de la tige 5. En particulier, le pion 6 est destiné à être logé dans et délogé des crans successifs. Pour plaquer le pion dans un cran sans qu'une force excessive ne soit nécessaire à l'utilisateur pour l'en déloger via la tige 5, l'homme du métier choisit un moyen d'appui adapté. En particulier, un ressort peut être choisi avec une constante de raideur suffisamment faible de sorte telle qu'une force minimale soit nécessaire pour déloger le pion 6 d'un cran. Comme on le voit sur les figures 5b, 6b 7b et 7c, le pion 6 pourvu dans la tige 5 vient donc en appui sur l'alternance de saillies S1, S2,...Sn et de creux C1, C2,...Cn. La forme du pion 6 est complémentaire aux formes des saillies S1, S2,...Sn et des creux C1, C2,...Cn pour obtenir l'effet escompté de maintien du pion 6 dans un cran. En outre, le diamètre du pion 6 est de l'ordre de grandeur de la hauteur des saillies S1, S2,...Sn et de la profondeur des creux C1, C2,...Cn, de sorte que lorsque le pion 6 est logé entre deux des saillies S1, S2,...Sn, celles-ci le maintiennent en position dans un des creux C1, C2,...Cn. Sur la figure 6a, le pion 6 est cylindrique et a un diamètre sensiblement du même ordre de grandeur que le diamètre des creux C1, C2,...Cn. La figure 6b montre un profil de cran selon le mode de réalisation de la figure 6a et comment le pion 6 peut être logé dans un tel cran. Sur la figure 6b le pion 6 voit ainsi sa surface cylindrique externe Sp offrir un maximum de contact avec l'intérieur cylindrique Sc du creux dans lequel il est logé, moyennant quoi le délogement du pion 6 dudit creux est limité par des frottements générés en opposition à ce délogement. Les saillies et les creux peuvent contenir avantageusement des congés, des méplats et des chanfreins de sorte à moduler lors du positionnement du pion 6 dans un cran, les zones de frottement du pion 6 avec les saillies et ainsi de moduler avantageusement l'effort nécessaire à l'utilisateur pour le délogement du pion 6 dudit cran.

La figure 4b est une vue de de l'intérieur de la valve 1 comprenant un crantage selon un mode de réalisation dans lequel les creux C1, C2,...Cn sont tous identiques. Selon ce mode de réalisation les creux C1, C2,...Cn sont des semi-cylindres.

Selon un mode de réalisation représenté en figure 5a, les saillies S1, S2,...Sn s'étendent radialement le long de l'axe Y transversal au premier axe longitudinal Z seulement sur une partie de la distance du fond 3 comprise entre l'intersection de l'ouverture débouchante 4 avec le fond 3 et la paroi latérale 2 du boîtier 10. Les saillies S1, S2,... Sn sont ici toutes identiques. Les saillies S1, S2,... Sn sont ici des demi-sphères. Dans une variante de ce mode de réalisation, les saillies peuvent être de forme géométrique différente, par exemple conique, pyramidale ou de forme arrondie. La figure 5b montre un profil de cran selon le mode de réalisation de la figure 5a et comment le pion 6 peut être logé dans un tel cran.

Selon le mode de réalisation représenté en figure 6a, les saillies et les creux s'étendent radialement depuis l'intersection de l'ouverture débouchante 4 avec le fond 3 et jusqu'à la paroi latérale 2 du boîtier 10.

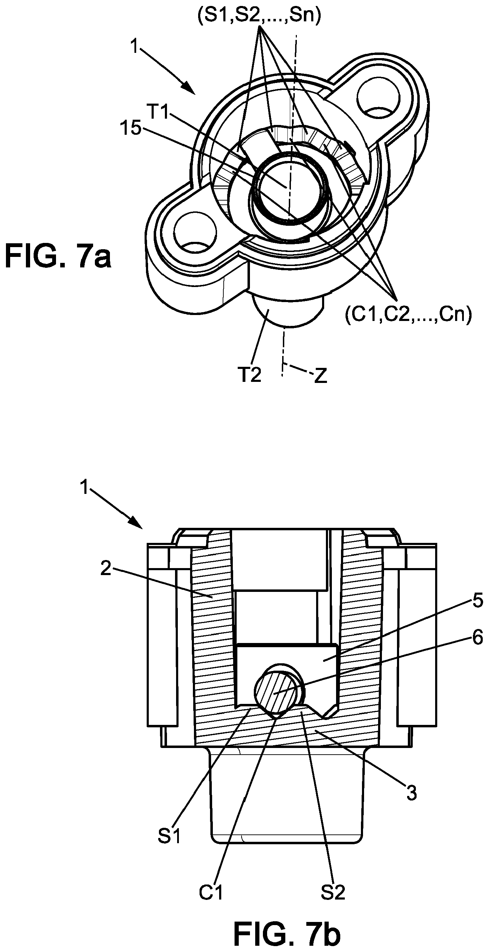

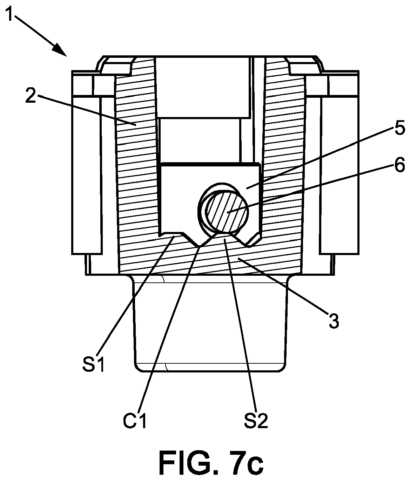

Dans le mode de réalisation de la figure 7a, les saillies S1, S2,...Sn sont toutes identiques. Les saillies S1, S2,...Sn comprennent chacune deux chanfreins, un méplat et deux congés qui permettent à l'utilisateur le maintien du pion 6 cylindrique dans un creux entre les deux chanfreins du creux. La figure 6b montre un profil de cran selon le mode de réalisation de la figure 6a et comment le pion 6 peut être logé dans un tel cran. Le délogement du pion 6 du creux se fait par un entraînement en rotation et translation de la tige 5 selon le premier axe longitudinal Z. La figure 7c montre ainsi le pion 6 peut être délogé d'un cran. Les chanfreins participent par leur inclinaison par rapport au fond 3 du boîtier 10 à l'accompagnement du délogement du pion 6.

Selon n'importe lequel des modes de réalisation précédents du boîtier et comme illustré sur les figures 4a, 4b, 5a, 6a et 7a, le boîtier 10 peut disposer d'une oreille 11 en prolongement solidaire dudit boîtier 10 vers l'extérieur. Le boîtier 10 peut disposer avantageusement de deux oreilles. Chaque oreille 11 peut représenter un surplus de matière, une surface, un repli, qui sert à accueillir un moyen de fixation dudit boîtier 10 sur un robinet 7, par exemple une vis pour une fixation par vissage ou un surplus de matière pour un emboutissage, rivetage, pliage ou clippage.

## Revendications

1. Robinet de gaz (7) comprenant :
- un corps (100) pourvu d'une entrée de gaz (E), d'une sortie de gaz (S) et d'une pluralité de cavités, de couloirs et de passages destinés à relier l'entrée de gaz (E) à la sortie de gaz (S), la pluralité de cavités, de couloirs et de passages comprenant une première cavité (A), un premier couloir (P1), une deuxième cavité (B), un couloir auxiliaire (P2), et une troisième cavité (C),
- un cône de régulation (103) s'étendant longitudinalement selon un premier axe longitudinal (Z) et ayant une surface extérieure,
dans lequel la **première cavité** (A) s'étend dans la direction de l'axe longitudinal (Z) et a une entrée (Ae), une première sortie (As1) et une deuxième sortie (As2), le cône de régulation (103) étant logé dans ladite première cavité (A) de sorte que la surface extérieure dudit cône de régulation (103) bouche la première sortie (As1) de la première cavité (A), le cône de régulation (103) étant apte à être tourné sur lui-même selon l'axe longitudinal (Z) dans la première cavité (A),
dans lequel le **premier couloir** (P1) a une entrée (P1e) et une sortie (P1s), l'entrée (P1e) dudit premier couloir (P1) étant directement reliée à la première sortie (As1) de la première cavité (A),
dans lequel la **deuxième cavité** (B) a une première entrée (Be1) et une sortie (Bs), la première entrée (Be1) de ladite deuxième cavité (B) étant directement reliée à la sortie (P1s) du premier couloir (P1),
- un **passage** (Pr) pourvu dans ledit cône de régulation (103) et s'étendant autour d'une circonférence (111) du cône de régulation (103), ledit passage (Pr) présentant une section s'élargissant continuellement dans un sens selon ladite circonférence (111),
ledit cône de régulation (103) ayant une première position angulaire (O1) dans laquelle ledit passage (Pr) pourvu dans ledit cône de régulation (103) relie l'entrée (Ae) de la première cavité (A) à la première sortie (As1) de la première cavité (A) et à la deuxième sortie (As2) de la première cavité (A),
dans lequel **le couloir auxiliaire** (P2) a une entrée (P2e) et une sortie (P2s), ladite entrée (P2e) dudit couloir auxiliaire (P2) étant directement reliée à la deuxième sortie (As2) de la première cavité (A),
dans lequel **la troisième cavité** (C) a une entrée (Ce) et une sortie (Cs), l'entrée (Ce) de ladite troisième cavité (C) étant directement reliée à la sortie (P2s) du couloir auxiliaire (P2) et la sortie (Cs) de ladite troisième cavité (C) étant directement reliée à une deuxième entrée (Be2) de la deuxième cavité (B),
dans lequel il est prévu **un volet rotatif** (V) logé dans l'entrée (Ce) de la troisième cavité (C) et pourvu d'un passage (Pv), ledit volet rotatif (V) étant apte à être tourné selon un second axe longitudinal (Z') dans la troisième cavité (C) entre une première position angulaire (O1), dans laquelle ledit passage (Pv) relie l'entrée (Ce) de la troisième cavité (C) à la deuxième entrée (Be2) de la deuxième cavité (B), et une deuxième position angulaire (O2), dans laquelle ledit passage (Pv) diverge de l'entrée (Ce) de la troisième cavité (C).

2. Robinet de gaz (7) selon l'une quelconque des revendications précédentes, dans lequel le cône de régulation (103) a une deuxième position angulaire (O2), comprise dans une deuxième plage d'angle (U2), dans laquelle position angulaire (O2) le passage (Pr) pourvu dans le cône de régulation (103) diverge la première sortie (As1) de la première cavité (A).

3. Robinet de gaz (7) selon la revendication précédente, dans lequel la troisième cavité (C) débouche à l'extérieur du corps (100) par une face supérieure (F1), ladite face supérieure (F1) étant différente de la face d'entrée (FE) du corps (100) qui comprend l'entrée de gaz (E) du corps (100) et différente de la face de sortie (FS) du corps (100) qui comprend la sortie de gaz (S) du corps (100).

4. Robinet de gaz (7) selon la revendication 3, dans lequel un système d'étanchéité (J1) est disposé autour du volet rotatif (V) et bouche un interstice (J0) présent entre ledit volet rotatif (V) et la troisième cavité (C).

5. Robinet de gaz (7) selon l'une quelconque des revendications 3 ou 4, dans lequel le volet rotatif (V) présente une face extérieure (Fv) qui débouche sur l'extérieur du corps (100), laquelle face extérieure (Fv) du volet rotatif (V) dispose d'une empreinte (T) de forme et dimension spécifiques, ladite empreinte (T) étant apte à recevoir l'insertion d'un outil de mise en rotation du volet rotatif (V) autour de son axe longitudinal (Z').

6. Robinet de gaz (7) selon l'une quelconque des revendications précédentes, dans lequel le volet rotatif (V) est constitué d'un cylindre creux à base circulaire et le passage (Pv) comprend un premier trou (Ve) situé sur une face latérale dudit cylindre et un deuxième trou (Vs) situé sur la base dudit cylindre qui est intérieure au robinet (7).

7. Robinet de gaz (7) selon la revendication 6, dans lequel le volet (V) comprend un troisième trou constituant une seconde entrée (Ve').

8. Robinet de gaz (7) selon l'une quelconque des revendications précédentes, dans lequel le second axe longitudinal (Z') est parallèle au premier axe longitudinal (Z).

9. Robinet de gaz (7) selon l'une quelconque des revendications précédentes, dans lequel le premier couloir (P1) et le couloir auxiliaire (P2) sont cylindriques.

10. Robinet de gaz (7) selon l'une quelconque des revendications précédentes, dans lequel le volet rotatif (V) contient un matériau choisi parmi le laiton, l'acier, l'aluminium, le cuivre.

11. Robinet de gaz (7) selon l'une des revendications précédentes, dans lequel le cône de régulation (103) est creux et percé en sa base pour constituer l'entrée (Ae) dudit cône de régulation (3).

12. Robinet de gaz (7) selon l'une quelconque des revendications précédentes, comportant une valve de contrôle (1) de débit de gaz comprenant une tige (5) à pion (6) entraînant en rotation le cône de régulation (103).
